# EUROPÄISCHE PATENTSCHRIFT

(11) **EP 3 103 575 B1**
(45) Veröffentlichungstag und Bekanntmachung des Hinweises auf die Patenterteilung: **12.02.2020**
(21) Anmeldenummer: 16001554.1
(22) Anmeldetag: 01.07.2011
(51) Int. Cl.: B23C 5/00, B23C 5/06, B23C 5/28, B27G 13/08

(54) **BEARBEITUNGSWERKZEUG FÜR DIE ZERSPANENDE BEARBEITUNG VON WERKSTOFFEN**
MACHINING TOOL FOR MACHINING MATERIALS
OUTIL D'USINAGE POUR USINAGE PAR ENLÈVEMENT DE MATIÈRE

(43) Veröffentlichungstag der Anmeldung: 14.12.2016
(62) Teilanmeldung aus: 11005415.2
(73) Patentinhaber: Ledermann GmbH & Co. KG, 72160 Horb a. N. (DE); HOLZ-HER GmbH, 72622 Nürtingen (DE)
(72) Erfinder: Sitzler, Benjamin, 72172 Sulz am Neckar (DE); Rambacher, Markus, 71696 Möglingen (DE)
(74) Vertreter: Zurhorst, Stefan

(56) Entgegenhaltungen:
- EP-A1- 1 415 777
- WO-A1-2005/032776
- DE-A1- 10 145 006
- JP-A- 5 138 424
- JP-A- 2010 094 748
- US-A- 4 222 298

## Beschreibung

Die Erfindung betrifft ein Bearbeitungswerkzeug für die zerspanende Bearbeitung von Werkstoffen der im Oberbegriff des Anspruchs 1 angegebenen Gattung. Ein solches Bearbeitungswerkzeug ist aus JP 5 138424 A bekannt.

Stetig höhere Produktivitätsanforderungen führen zu höheren Transportgeschwindigkeiten von spanend zu bearbeitenden Werkstücken sowie zu höheren Werkzeugdrehzahlen bzw. höheren Schnittgeschwindigkeiten. Dies kann sich nachteilig auf die Zerspanungsqualität, auf die Standzeit des Werkzeuges und auf die Lärmentwicklung auswirken, was aber der erhöhten Produktivitätsanforderung und auch den zunehmend schärferen gesetzlichen Regelungen zur Lärmemission entgegenläuft.

Um ein möglichst lärmarmes Werkzeug zu konstruieren, wird eine möglichst störkonturfreie Form des Werkzeuges angestrebt. In der Praxis wird der Grundkörper des Werkzeuges möglichst zylindrisch gestaltet. Die Schneidelemente ragen nur um einen solchen Betrag über die Hüllfläche des Grundkörpers hinaus, der erforderlich ist, um ein Auflaufen des Werkzeuggrundkörpers auf das Werkstück zu verhindern. Außerdem werden die Spanräume, die bezogen auf die Drehrichtung des Werkzeuges vor den jeweiligen Schneidelementen angeordnet sind, möglichst klein gehalten.

Dennoch lässt es sich nicht verhindern, dass durch das Schneidelement und den vorgelagerten Spanraum ein aerodynamisch wirkender Flügel entsteht, der ein unerwünschtes Luftgeräusch erzeugt. Ergänzend hierzu kommt es beim Eintreten des Schneidelementes in das zu bearbeitende Werkstück zu einer Komprimierung des vor dem Schneidelement vorhandenen Luftpolsters und somit zu einem pulsierenden Luftgeräusch.

Aus der DE 10 2009 005 634 A1 ist ein derartiges Werkzeug bekannt. Am Umfang des Schneidenträgers bzw. des Werkzeuggrundkörpers ist eine Anzahl von Schneideinsätzen angeordnet. Vor den Schneideinsätzen sind langlochförmige Spanräume angeordnet. Die Schneideinsätze drücken während der Drehbewegung des Werkzeuges stetig Luft gegen das in den Spanräumen befindliche Luftpolster mit der Folge von Luftverwirbelungen und Lärm.

Eine Schallreduktion wird üblicherweise beispielsweise mittels kleinerer Spanräume, Konstruktionen mit wenig Abrisskanten, Dämpfungselementen etc. erreicht. Die Entstehung der Schallwellen und die verschiedenen Druckgebiete, welche sich an einem Werkzeug ausbilden, wurden bisher nicht beachtet.

Ein weiterer Problemkreis bei vorbekannten Zerspanungswerkzeugen liegt in der Spanabfuhr. Da die Spanräume zur Geräuschminderung möglichst klein gehalten werden sollen, kann nur eine begrenzte Menge von dem zerspanten Werkstoff aufgenommen werden. Dabei ist zu beobachten, dass abgetragene Späne aus dem Spanraum wieder zurück in den Bereich der Schneidelemente gelangen können, in dessen Folge sie nochmals zerspant werden. Durch eine solche Mehrfachkollision bereits abgetragener Werkstoffpartikel entsteht ein überdurchschnittlicher Werkzeugverschleiß. Der Reibanteil der Zerspanung mit geometrisch bestimmten und geometrisch unbestimmten Schneiden führt zur Temperaturerhöhung und zum vorzeitigen Verschleiß der Werkzeuge. Diese Tatsache bedingt eine Minderung der Bearbeitungsqualität und führt zu hohen Kosten für die Werkzeuginstandhaltung.

Außerdem kann die trennende Bearbeitung von bestimmten Werkstoffen (z. B. Holz, Grafit, Keramik, CFK etc.) zu einem gesundheitsgefährdenden Aufkommen an Staub und Spänen führen, welche zudem eine Brand- und Explosionsgefahrdung hervorrufen können.

Es sind deshalb aufwändige Maßnahmen zur Abfuhr von Staub und Spänen zu ergreifen. Die Erfassung von Staub und Spänen erfolgt gegenwärtig durch werkzeugnahe Absaughauben bei hohen Absaugvolumenströmen und Strömungsgeschwindigkeiten. Dieses Erfassungskonzept setzt ein kontrolliertes Entweichen des Spans aus dem Spanraum voraus. Eine diesbezügliche geometrische Anpassung der Spanräume vor der Werkzeugschneide wird aber maßgeblich durch fertigungstechnische Bedingungen begrenzt. Die Steuerung des Entweichungsprozesses ist damit deutlich eingeschränkt.

Zur Unterstützung der Spanabfuhr schlägt die JP 5 138424 A radial angeordnete Bohrungen vor, die in die jeweils zugeordneten Spanräume münden. Unter Einwirkung der Fliehkraft sollen Späne aus den Spanräumen durch die radialen Bohrungen hindurch entweichen können.

Darüber hinaus überschneiden sich die beiden vorstehend beschriebenen Problemkreise der Lärmentwicklung einerseits und der Spanabfuhr andererseits: In der Praxis hat sich nämlich gezeigt, dass sich in den Spanräumen und an den Schneidelementen abgetragenes Zerspangut ablagern kann. Auch hierdurch entstehen Turbulenzen im Luftstrom, die ebenfalls zur Lärmentwicklung beitragen. Auch die vorstehend beschriebene Absaugeinrichtung ist infolge der erforderlichen großen Volumenströme eine nicht zu vernachlässigende Schallquelle.

Der Erfindung liegt die Aufgabe zugrunde, ein gattungsgemäßes Bearbeitungswerkzeug derart weiterzubilden, dass dessen Lärmentwicklung im Betrieb verringert ist, während gleichzeitig die Standzeit und die Zerspanungsqualität verbessert sind.

Diese Aufgabe wird durch ein Bearbeitungswerkzeug mit den Merkmalen des Anspruchs 1 gelöst.

Nach der Erfindung ist vorgesehen, dass mindestens ein durchgängiger Luftkanal im Grundkörper ausgebildet ist, wobei der Luftkanal mit einer Spanraumöffnung in den Spanraum mündet, und wobei der Luftkanal mit einer der Spanraumöffnung gegenüberliegenden Konturöffnung aus der Außenkontur des Grundkörpers herausgeführt ist. Der Luftkanal ist als Entlastungskanal ausgebildet, wobei die Konturöffnung des Luftkanals bezogen auf die Drehrichtung hinter der zugeordneten Spanraumöffnung liegt.

Der Luftkanal erlaubt einen Druckausgleich zwischen dem Spanraum und der äußeren Werkzeugumgebung während des Zerspanvorganges. Ein Teil des im Spanraum entstehenden Luftdruckes wird durch den Luftkanal abgeleitet. Hierdurch wird verhindert, dass sich im Spanraum ein Luftpolster aufbaut, welches ansonsten einerseits zur Lärmentwicklung beitragen und andererseits im Spanraum die Aufnahme des Spangutes beeinträchtigen würde. Bei einer entsprechenden geometrischen Ausgestaltung kann durch diesen Luftkanal außerdem zumindest ein Teil der im Spanraum angesammelten Späne oder des sich dort entwickelnden Staubes abgeführt werden. Beides führt zu einer deutlichen Minderung der Geräuschentwicklung. In ersten praktischen Versuchen konnte eine Reduzierung der Lärmemission von 2 bis 3 dB(A) erreicht werden.

Durch die Spanabfuhr aus dem Spanraum wird eine unkontrollierte Mehrfachzerspanung verringert, wodurch auch der Schneidenverschleiß verringert und die Standzeit des Werkzeuges erhöht wird. Außerdem wird die Qualität der Zerspanung verbessert, indem beispielsweise bei kritischen Werkstoffen wie Kunststoff, Aluminium oder dergleichen ein Schmieren unterbunden wird. Unkontrollierte Ablagerungen im Bereich der Schneide und des Spanraumes werden vermieden. Außerdem wird der Reibanteil bei der Zerspanung reduziert. Der Luftaustausch durch den mindestens einen Luftkanal reduziert darüber hinaus die Arbeitstemperatur, was zusätzlich zur Reduzierung des Schneidenverschleißes beiträgt, und wodurch ein Schmieren von zerspanten wärmeempfindlichen Werkstoffen (Kunststoff) vermieden wird. Es wird vermieden, dass das wärmeempfindliche Zerspangut warm und klebrig wird, oder dass sich die Werkstückkante erwärmt und es zu Verfärbungen insbesondere an bearbeiteten Kunststoffkanten kommt.

Gemäß der Erfindung ist der Luftkanal als Entlastungskanal ausgebildet, wobei die Konturöffnung des Luftkanals bezogen auf die Drehrichtung hinter der zugeordneten Spanraumöffnung liegt. Zweckmäßig weist der als Entlastungskanal ausgebildete Luftkanal im Bereich seiner Konturöffnung eine Längsachse auf, wobei die aus der Konturöffnung austretende Längsachse am Ort der Konturöffnung entgegen der Drehrichtung geneigt ist.

Hierdurch wird erreicht, dass sich bei drehendem Werkzeug eine Druckdifferenz zwischen der spanraumseitigen Spanraumöffnung und der gegenüberliegenden Konturöffnung derart ausbildet, dass ein Luftstrom vom Spanraum zur Konturöffnung entsteht. Dieser aus dem Spanraum herausführende Luftstrom saugt das Zerspangut aus dem Spanraum ab, wodurch die vorstehend beschriebene Wirkung der Schallreduktion, der Spanabfuhr und der Kühlung ergänzt wird.

In einer vorteilhaften Ausführungsform ist ein weiterer Luftkanal als Spülkanal ausgebildet, wobei die Konturöffnung des Luftkanals bezogen auf die Drehrichtung vor der zugeordneten Spanraumöffnung liegt. Zweckmäßig weist der als Spülkanal ausgebildete Luftkanal im Bereich seiner Konturöffnung eine Längsachse derart auf, dass die aus der Konturöffnung austretende Längsachse am Ort der Konturöffnung zur Drehrichtung hin geneigt ist. In diesem Falle ist die in Drehrichtung nach vorne weisende Konturöffnung während des Betriebes dem anstehenden aerodynamischen Staudruck ausgesetzt, woraus hier eine positive Druckdifferenz gegenüber dem Spanraum entsteht. In der Folge wird durch den Spülkanal Luft in den Spanraum hineingedrückt, was zu einem Ausspülen des Spanraumes mit verbesserter Spanabfuhr und erhöhter Kühlwirkung führt. Gleichzeitig trägt der Spülkanal auch zum Abbau von Schall erzeugenden Druckspitzen im Spanraum bei.

In vorteilhafter Weiterbildung ist die außenseitige Konturöffnung des als Spülkanal ausgebildeten Luftkanals als aerodynamisch geformte Lufthutze ausgeführt. Die Lufthutze kann gegenüber der Außenkontur erhaben sein, um eine gute Ausnutzung des dort anstehenden aerodynamischen Staudruckes zu erzielen. Insbesondere ist die Lufthutze gegenüber der Außenkontur versenkt, was bei guter aerodynamischer Wirksamkeit leicht herstellbar ist und Kollisionen mit dem Werkstück und abgetragenen Partikeln vermeidet. Unter Ausnutzung des anstehenden Staudruckes wird der Luftstrom gleichmäßig von außen in den Spanraum eingeleitet. Die Lufthutze vermeidet dabei durch ihre aerodynamische Formgebung lokale Strömungsablösungen und in der Folge Schall erzeugende Verwirbelungen.

In einer bevorzugten Ausführungsform ist die aus der Spanraumöffnung austretende und in den Spanraum eintretende Längsachse des als Spülkanal ausgebildeten Luftkanals bezogen auf eine durch die Drehachse vorgegebene und durch den Spanraum laufende Radialrichtung radial nach außen geneigt. Hierdurch ist der durch den Spülkanal in den Spanraum eintretende Luftstrom zumindest anteilig radial nach außen gerichtet, was zur Verbesserung der Spanabfuhr aus dem Spanraum beiträgt.

Vorteilhaft weist die aus der Spanraumöffnung austretende und in den Spanraum eintretende Längsachse des als Spülkanal ausgebildeten Luftkanals bezogen auf die Drehachse eine axiale Richtungskomponente auf. Die mittels des Spülkanals aus dem Spanraum ausgeblasenen Späne erfahren hierdurch ebenfalls eine Bewegungskomponente in axialer Richtung, was einerseits das Ausblasergebnis und andererseits eine gezielte Ableitung der Späne zu einer seitlich versetzten Spanabsaugung verbessern kann. Je nach Bedarf können die radiale und die axiale Richtungskomponente der Längsachse des als Spülkanal ausgebildeten Luftkanals für sich alleine genommen oder in Kombination miteinander eingesetzt werden.

In zweckmäßiger Weiterbildung der Erfindung münden mindestens ein als Entlastungskanal ausgebildeter Luftkanal und mindestens ein als Spülkanal ausgebildeter Luftkanal in einen gemeinsamen Spanraum. Hierdurch wird neben einer kontrollierten Lufteinleitung eine ebenso kontrollierte Luftableitung erreicht. Der die Späne ableitende Entlastungskanal wird zuverlässig freigespült, so dass sich auch hier keine Späne absetzen können. Außerdem ergänzen sich beide Luftkanäle gegenseitig in ihrer Schall reduzierenden Wirkung durch gemeinsames Ableiten von Druckwellen. Ausführungsbeispiele der Erfindung sind nachfolgend anhand der Zeichnung näher beschrieben. Es zeigen:
- Fig. 1: in einer perspektivischen Ansicht ein erstes erfindungsgemäß ausgeführtes Bearbeitungswerkzeug mit einem vom Spanraum aus entgegen der Drehrichtung zur Außenkontur hin verlaufenden Entlastungskanal;
- Fig. 2: in einer Schnittdarstellung das Werkzeug nach Fig. 1 mit Einzelheiten zur geometrischen Ausgestaltung des geradlinigen Entlastungskanals;
- Fig. 3: in einer schematischen Ausschnittsdarstellung eine Variante der Anordnung nach Fig. 2 im Bereich eines einzelnen Spanraumes mit einem winklig verlaufenden Entlastungskanal;
- Fig. 4: in einer perspektivischen Ansicht ein nicht erfindungsgemäß ausgeführtes Bearbeitungswerkzeug mit einem von der Außenkontur aus entgegen der Drehrichtung in den Spanraum hinein verlaufenden Spülkanal;
- Fig. 5: in einer Schnittdarstellung das Werkzeug nach Fig. 4 mit Einzelheiten zur geometrischen Ausgestaltung seines Spülkanals mit einer eingangsseitigen Lufthutze;
- Fig. 6: in einer perspektivischen Ansicht eine Variante der Werkzeuge nach den Fig. 1 bis 3 mit einer Kombination aus Spül- und Entlastungskanal;
- Fig. 7: in einer Schnittdarstellung das Werkzeug nach Fig. 6 mit weiteren Einzelheiten zur Anordnung beider Kanäle relativ zum Spanraum;
- Fig. 8: in einer perspektivischen Ausschnittsdarstellung ein weiteres erfindungsgemäß ausgeführtes Werkzeug mit einer Vielzahl von Schneiden, Spanräumen und unterschiedlich angeordneten Luftkanälen;
- Fig. 9: die Anordnung nach Fig. 8 von der gegenüberliegenden Seite aus betrachtet mit weiteren Einzelheiten zur unterschiedlichen Anordnung der ausgangsseitigen Konturöffnungen;
- Fig. 10: in einer Schnittdarstellung ein weiteres nicht erfindungsgemäß ausgeführtes Bearbeitungswerkzeug mit einem vom Spanraum zur Seitenfläche des Werkzeuggrundkörpers geführten Luftkanal.

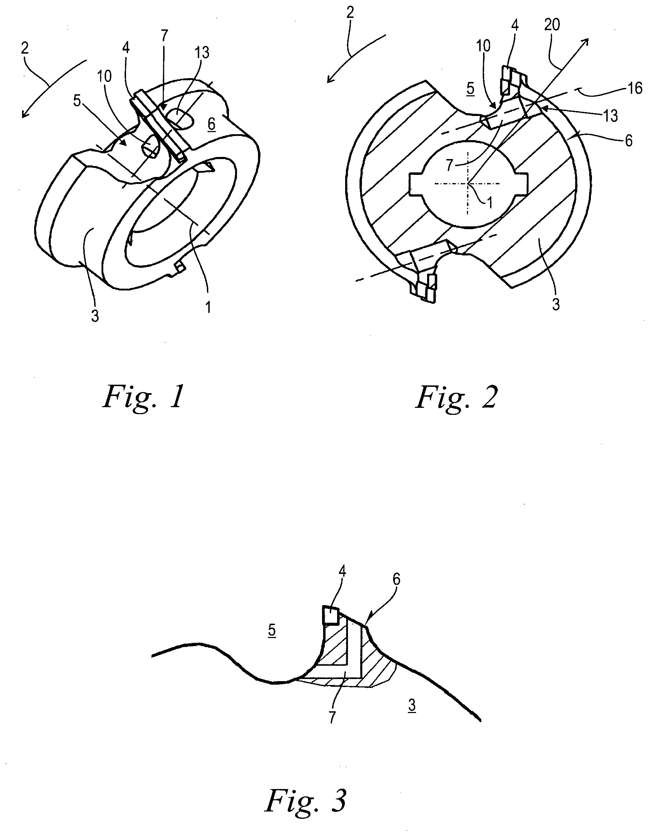

Fig. 1 zeigt in einer perspektivischen Ansicht ein erstes Ausführungsbeispiel des erfindungsgemäßen Bearbeitungswerkzeuges. Das gezeigte Bearbeitungswerkzeug ist für die zerspanende Bearbeitung von Werkstoffen wie Holz oder holzartige Werkstoffe, Metalle (Eisen und NE-Metalle), Kunststoffe und/oder Verbundwerkstoffe vorgesehen. Das Werkzeug weist einen im Wesentlichen rotationssymmetrischen Grundkörper 3 auf, an dessen Umfang mindestens eine, hier beispielhaft zwei Schneiden 4 angeordnet sind. Im Betrieb wird das Werkzeug um eine Drehachse 1 in einer durch einen Pfeil angegebenen Drehrichtung 2 drehend angetrieben. Jeder einzelnen Schneide 4 ist ein in den Grundkörper 3 eingearbeiteter Spanraum 5 zugeordnet, wobei jeder Spanraum 5 bezogen auf die Drehrichtung 2 vor der zugeordneten Schneide 4 liegt. Der Grundkörper 3 weist abseits des Spanraumes 5 eine Außenkontur 6 auf, wobei der Spanraum 5 gegenüber der radial äußeren Außenkontur 6 radial nach innen zurückversetzt ist.

Im Grundkörper 3 ist mindestens ein durchgängiger Luftkanal 7, 8, 9 ausgebildet, wobei verschiedene beispielhafte Ausgestaltungen der Luftkanäle 7, 8, 9 nachfolgend im Zusammenhang mit den Fig. 1 bis 10 näher beschrieben sind. Im Ausführungsbeispiel nach Fig. 1 ist für jede Schneide 4 bzw. für jeden der den einzelnen Schneiden 4 zugeordneten Spanräumen 5 je ein durchgängiger Luftkanal 7 vorgesehen.

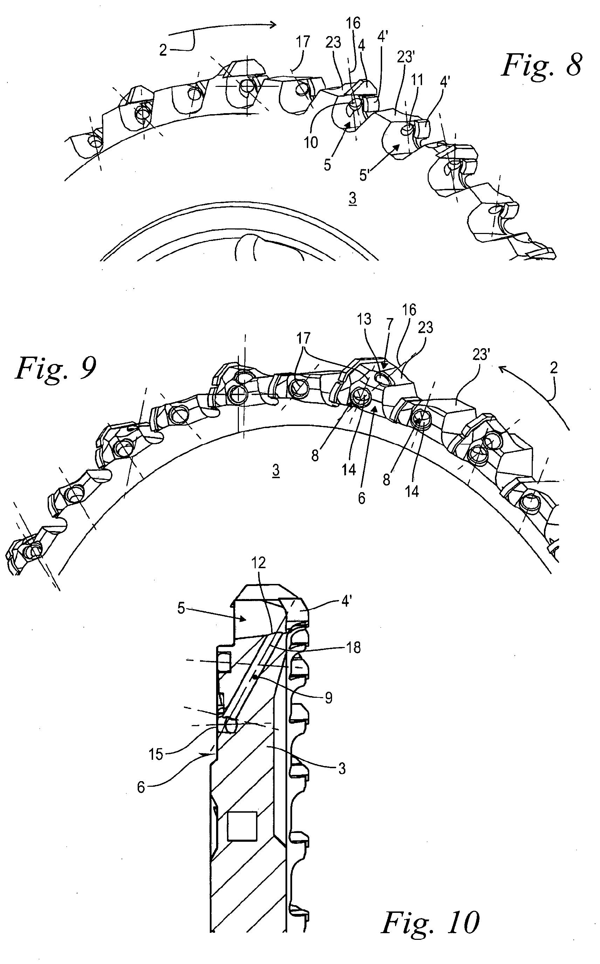

Der einzelne Luftkanal 7 mündet mittels einer Spanraumöffnung 10 in den Spanraum 5 und ist mittels einer der Spanraumöffnung 10 gegenüberliegenden Konturöffnung 13 aus der radial äußeren Außenkontur 6 des Grundkörpers 3 herausgeführt. Im gezeigten Ausführungsbeispiel liegen die Konturöffnungen 13 auf der Umfangsseite des Grundkörpers 3, können aber auch entsprechend der Darstellung nach Fig. 10 auf dessen Stirn- bzw. Seitenfläche liegen.

Die gezeigten Luftkanäle 7 sind jeweils als Entlastungskanal für den jeweiligen Spanraum 5 ausgebildet, in dem die Konturöffnungen 13 der Luftkanäle 7 bezogen auf die Drehrichtung 2 hinter der zugeordneten Spanraumöffnung 10 liegen.

Fig. 2 zeigt in einer Schnittdarstellung das Bearbeitungswerkzeug 1 mit weiteren Einzelheiten zur geometrischen Ausgestaltung. Demnach ist zu erkennen, dass die Luftkanäle 7 als geradlinige Bohrungen mit einer Längsachse 16 ausgestaltet sind. Alternativ kann eine Ausführung nach Fig. 3 vorgesehen sein, wobei in Fig. 3 in schematischer Schnittdarstellung ein Luftkanal 7 mit einem nicht geradlinigen, hier abgewinkelten Verlauf gezeigt ist. In den übrigen Merkmalen und Bezugszeichen stimmt das Ausführungsbeispiel nach Fig. 3 mit demjenigen nach den Fig. 1 und 2 überein.

Unter erneutem Bezug auf Fig. 2 ist erkennbar, dass der Luftkanal 7 als Stufenbohrung mit an der Konturöffnung 13 gegenüber dem Bereich der Spanraumöffnung 10 erweitertem Querschnitt ausgeführt ist. Es können aber auch andere Querschnittsverläufe sowie eine Ausgestaltung des Luftkanals 7 mit konstantem Querschnitt zweckmäßig sein.

Die Längsachse 16 des Luftkanals 7 ist im Bereich der Konturöffnung 13 bezogen auf ihre Austrittsrichtung aus der Konturöffnung 13 entgegen der Drehrichtung 2 nach hinten geneigt. Außerdem ist durch die Drehachse 1 eine senkrecht darauf stehende Radialrichtung 20 definiert, die die Längsachse 16 des Luftkanals 7 am Ort der Konturöffnung 13 schneidet. Gegenüber dieser Radialrichtung 20 ist die aus der Konturöffnung 13 austretende Längsachse 16 radial nach außen und entgegen der Drehrichtung 2 nach hinten geneigt.

In der gegenüberliegenden Richtung trifft der als Bohrung ausgeführte Luftkanal 7 nicht mit seinem vollen Querschnitt auf den Spanraum 5. Vielmehr schneidet der Luftkanal 7 den radial inneren Grund der Spanraumöffnung 5 nur an, so dass die dort gebildete Spanraumöffnung 10 am radial inneren Grund des Spanraumes 5 liegt. Es kann aber auch eine Ausgestaltung zweckmäßig sein, bei der der Luftkanal 7 mit seinem vollen Querschnitt unter Bildung der Spanraumöffnung 10 direkt unterhalb der Schneide 4 in die Rückwand des Spanraumes 5 mündet.

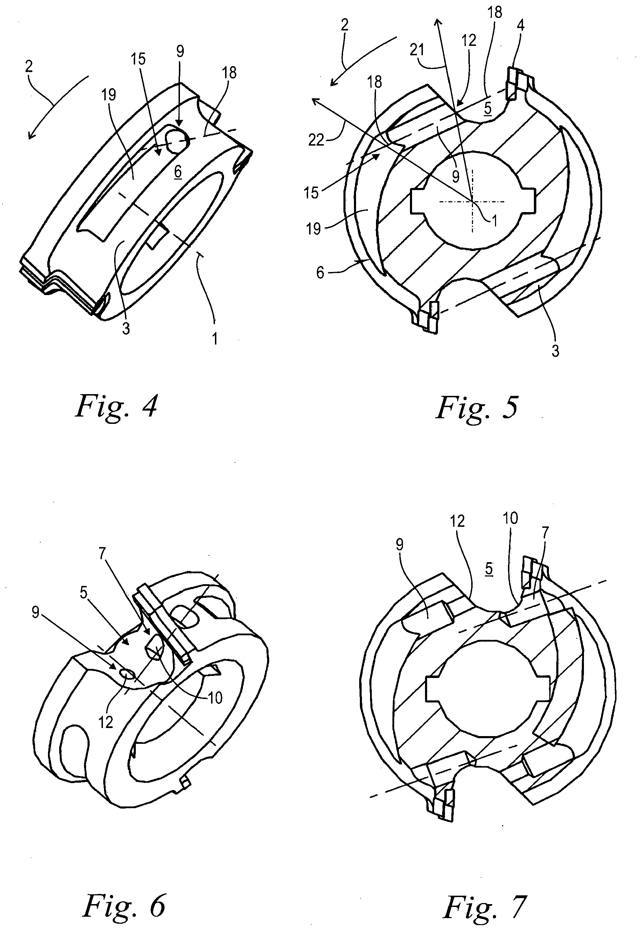

Die Fig. 4 und 5 zeigen ein weiteres Ausführungsbeispiel eines nicht erfindungsgemäß ausgeführten Bearbeitungswerkzeuges, wobei in Fig. 4 eine perspektivische Ansicht dieses Bearbeitungswerkzeuges und in Fig. 5 eine Schnittdarstellung des gleichen Bearbeitungswerkzeuges gezeigt sind. Sofern nicht ausdrücklich abweichend angegeben, stimmt das Ausführungsbeispiel nach den Fig. 4 und 5 in seinen Bezugszeichen mit demjenigen nach den Fig. 1 bis 3 überein.

In dem Ausführungsbeispiel nach den Fig. 4 und 5 ist jedem Spanraum 5 je ein Luftkanal 9 zugeordnet, wobei die Luftkanäle 9 als Spülkanal derart ausgebildet sind, dass die jeweilige Konturöffnung 15 des Luftkanals 9 bezogen auf die Drehrichtung 2 vor der zugeordneten Spanraumöffnung 12 des Luftkanals 9 liegt. Der Luftkanal 9 ist beispielhaft als zylindrische Bohrung mit konstantem Querschnitt und einer Längsachse 18 ausgebildet, kann aber auch abweichende Querschnittsformen und einen abweichenden Verlauf der Längsachse 18 aufweisen, wie dies im Zusammenhang mit den Fig. 1 bis 3 beschrieben ist.

Die aus der Konturöffnung 15 des als Spülkanal ausgebildeten Luftkanals 9 in der Drehrichtung 2 nach vorne austretende Längsachse 18 ist am Ort der Konturöffnung 15 zur Drehrichtung 2 hin geneigt. Außerdem ist eine senkrecht zur Drehachse 1 stehende Radialrichtung 22 definiert, die die Längsachse 18 des Luftkanals 9 am Ort der Konturöffnung 15 schneidet. Gegenüber dieser Radialrichtung 22 ist die Längsachse 18 am Ort der Konturöffnung 15 radial nach außen geneigt.

Die in der Drehrichtung 2 vordere Konturöffnung 15 kann in einfacher Ausgestaltung dadurch gebildet sein, dass der zylindrische Luftkanal 9 die radial äußere, ungestörte Außenkontur 6 des Grundkörpers 3 schneidet. In dem gezeigten Beispiel ist die vordere Konturöffnung 15 des als Spülkanal ausgebildeten Luftkanals 9 als aerodynamisch geformte, gegenüber der radial äußeren Außenkontur 6 versenkte Lufthutze 19 ausgeführt. Die Lufthutze 19 kann in einem anderen, beispielsweise axial äußeren Bereich der Außenkontur 6 angeordnet sein. Außerdem kann sie auch gegenüber der Außenkontur 6 erhaben sein. Die Lufthutze 19 ist dabei derart gerundet ausgeführt, dass sie unter Vermeidung von lokalen Strömungsabrissen sanft geschwungen von der radial äußeren Außenkontur 6 radial nach innen bis hin zur zylindrischen Bohrung des Luftkanals 9 verläuft.

An seinem der Konturöffnung 15 gegenüberliegenden, also entgegen der Drehrichtung 2 liegenden Ende mündet der Luftkanal 9 mittels einer Spanraumöffnung 12 in den Spanraum 5. Abweichend vom Luftkanal 7 nach Fig. 2 liegt die Spanraumöffnung 12 nicht im radial inneren Grund des Spanraums 5, sondern in dessen bezogen auf die Drehrichtung 2 vorderer Stirnfläche. Es kann aber auch eine Möglichkeit zweckmäßig sein, bei der die Spanraumöffnung 12 weiter radial innen im Grund des Spanraums 5 vergleichbar zur Spanraumöffnung 10 nach Fig. 2 liegt.

Ausgehend von der Drehachse 1 und senkrecht dazu verläuft eine Radialrichtung 21 durch den Spanraum 5. Nach Fig. 5 ist die Radialrichtung 21 derart gelegt, dass sie die aus der Spanraumöffnung 12 des Luftkanals 9 austretende Längsachse 18 am Ort der Spanraumöffnung 12 schneidet. Die aus der Spanraumöffnung 12 austretende und in den Spanraum 5 eintretende Längsachse 18 des als Spülkanal ausgebildeten Luftkanals 9 ist bezogen auf die vorgenannte Radialrichtung 21 radial nach außen geneigt. Dies gilt auch für jeden anderen Kreuzungspunkt der Radialrichtung 21 mit der Längsachse 18 innerhalb des Spanraumes 5.

Die Fig. 6 und 7 zeigen ein weiteres Ausführungsbeispiel der Erfindung, wobei Fig. 6 das derart ausgebildete Bearbeitungswerkzeug in einer perspektivischen Ansicht darstellt, während das gleiche Bearbeitungswerkzeug in Fig. 7 als Schnittdarstellung gezeigt ist. Hierbei münden in jeden Spanraum 7 jeweils mindestens ein, hier genau ein als Entlastungskanal ausgebildeter Luftkanal 7, sowie mindestens ein, hier genau ein als Spülkanal ausgebildeter Luftkanal 9 mittels ihrer Spanraumöffnungen 10, 12. Der als Entlastungskanal ausgebildete Luftkanal 7 ist entsprechend dem Ausführungsbeispiel nach den Fig. 1 bis 3 ausgeführt, wobei die Merkmale und Bezugszeichen betreffend den Luftkanal 7 nach den Fig. 1 bis 3 in sinngemäß gleicher Weise gelten. Der als Spülkanal ausgebildete Luftkanal 9 ist entsprechend dem Ausführungsbeispiel nach den Fig. 4 und 5 einschließlich der dort gezeigten Lufthutze 19 ausgeführt, wobei die Merkmale und die Bezugszeichen betreffend den Luftkanal 9 nach den Fig. 4 und 5 sinngemäß gelten. Der einzige Unterschied des Luftkanals 9 nach den Fig. 6 und 7 gegenüber dem Luftkanal 9 nach den Fig. 4 und 5 besteht darin, dass der Luftkanal 9 nach den Fig. 6 und 7 als Stufenbohrung mit zur Spanraumöffnung 12 hin sich verengendem Querschnitt ausgeführt ist. In den übrigen Merkmalen und Bezugszeichen stimmt das Ausführungsbeispiel nach den Fig. 6 und 7 mit denjenigen nach den Fig. 1 bis 5 überein.

Die Fig. 8 und 9 zeigen in einer perspektivischen Ausschnittsdarstellung den radial äußeren Umfangsbereich eines weiteren Ausführungsbeispiels der Erfindung, wobei das Bearbeitungswerkzeug in Fig. 8 von der einen Stirnfläche aus und in Fig. 9 von der gegenüberliegenden Stirnfläche aus betrachtet dargestellt ist. Hierbei ist der Grundkörper 3 bezogen auf die Umfangsrichtung bzw. die Drehrichtung 2 alternierend mit Schneidenträgern 23, 23' versehen, wobei an den Schneidenträgern 23 je eine radiale äußere Schneide 4 und eine stirnseitig hervorstehend Schneide 4' befestigt sind, während von den Schneidenträgern 23' lediglich die axial stirnseitig hervorstehenden Schneiden 4' getragen sind.

Aus der Zusammenschau der Fig. 8 und 9 ergibt sich, dass durch die Schneidenträger 23 jeweils zwei verschiedene als Entlastungskanal ausgebildete Luftkanäle 7, 8 hindurchgeführt sind, die mittels einer gemeinsamen Spanraumöffnung 10 in den zugeordneten Spanraum 5 münden, und die jeweils eigene, winklig zueinander stehende Längsachsen 16, 17 aufweisen. Die Längsachsen 16, 17 verlaufen derart, dass die Konturöffnungen 13 der Luftkanäle 7 auf der radial äußeren Außenkontur 6 der Schneidenträger 23 liegen, während die Konturöffnungen 14 der Luftkanäle 8 auf der stirnseitigen bzw. seitlichen Außenkontur 6 des Grundkörpers 3 bzw. des Schneidenträgers 23 angeordnet sind. In den Schneidenträgern 23' fehlen die Luftkanäle 7, während dort ausschließlich Luftkanäle 8 entsprechend den Luftkanälen 8 der Schneidenträger 23 vorgesehen sind. In ihrer übrigen Ausgestaltung entsprechen die Luftkanäle 8 den Luftkanälen 7, welche wiederum in ihren weiteren Merkmalen und Bezugszeichen entsprechend den Luftkanälen 7 nach den Fig. 1 bis 3 sowie 6 und 7 ausgeführt sind. Zusätzlich können auch als Spülkanäle ausgeführte Luftkanäle 9 entsprechend der Darstellung nach den Fig. 1 bis 7 vorgesehen sein. Sofern nicht abweichend erwähnt, stimmt das Bearbeitungswerkzeug nach den Fig. 8 und 9 in seinen übrigen Merkmalen und Bezugszeichen mit den Bearbeitungswerkzeugen nach den Fig. 1 bis 7 überein.

Fig. 10 zeigt in einer Schnittdarstellung schließlich noch ein nicht erfindungsgemäß ausgeführtes Bearbeitungswerkzeug, wobei der als Spülkanal ausgebildete Luftkanal 9 mit seiner Spanraumöffnung 12 in den Grund des Spanraumes 5 mündet. Ausgehend von der Spanraumöffnung 12 ist der Luftkanal 9 durch den Grundkörper 3 radial nach innen mit einer axialen Richtungskomponente zur zugeordneten Konturöffnung 15 geführt, wobei der Luftkanal 9 mittels seiner Konturöffnung 15 an einer den Schneiden 4' gegenüberliegenden Stirnfläche des Grundkörpers 3 radial innenseitig des Spanraums 5 aus der Außenkontur 6 herausgeführt ist. Die aus der Spanraumöffnung 12 austretende und in den Spanraum 5 eintretende Längsachse 18 des als Spülkanal ausgebildeten Luftkanals 9 weist bezogen auf die Drehachse 1 (Fig. 1, 2) der weiter oben näher beschriebenen radialen Richtungskomponente auch eine axiale Richtungskomponente derart auf, dass der aus der Spanraumöffnung 12 austretende und in den Spanraum 5 eintretende Luftstrom und damit auch die aus dem Spanraum 5 ausgeblasenen Späne zu den seitlichen Schneiden 4' und einer dort angeordneten, nicht dargestellten Spanabsaugung hin geführt werden. Natürlich kann aber auch eine entgegen gesetzte axiale Richtungskomponente vorgesehen sein. Neben der hier gezeigten Kombination von axialer und radialer Richtungskomponente kann auch eine rein axiale oder rein radiale Richtungskomponente zweckmäßig sein. Auch hier gilt, dass das Ausführungsbeispiel nach Fig. 10 in seinen übrigen Merkmalen und Bezugszeichen mit dem Ausführungsbeispiel nach den Fig. 8 und 9 übereinstimmt.

## Patentansprüche

1. Bearbeitungswerkzeug für die zerspanende Bearbeitung von Werkstoffen, insbesondere für Holz oder holzartige Werkstoffe, Metalle, Kunststoffe und/oder Verbundwerkstoffe, vorgesehen zum drehenden Antrieb um eine Drehachse (1) in einer Drehrichtung (2), umfassend einen Grundkörper (3) und mindestens eine am Grundkörper (3) angebrachte Schneide (4) sowie einen der jeweiligen Schneide (4) zugeordneten, bezogen auf die Drehrichtung (2) vor der Schneide (4) im Grundkörper (3) ausgebildeten Spanraum (5), wobei der Grundkörper (3) abseits des Spanraumes (5) eine Außenkontur (6) aufweist,
wobei mindestens ein durchgängiger Luftkanal (7, 8) im Grundkörper (3) ausgebildet ist, wobei der Luftkanal (7, 8) mit einer Spanraumöffnung (10, 11) in den Spanraum (5) mündet, und wobei der Luftkanal (7, 8) mit einer der Spanraumöffnung (10, 11) gegenüberliegenden Konturöffnung (13,14) aus der Außenkontur (6) des Grundkörpers (3) herausgeführt ist, **dadurch gekennzeichnet, dass** der Luftkanal (7, 8) als Entlastungskanal ausgebildet ist, wobei die Konturöffnung (13, 14) des Luftkanals (7, 8) bezogen auf die Drehrichtung (2) hinter der zugeordneten Spanraumöffnung (10, 11) liegt.

2. Bearbeitungswerkzeug nach Anspruch 1,
**dadurch gekennzeichnet, dass** der als Entlastungskanal ausgebildete Luftkanal (7, 8) im Bereich seiner Konturöffnung (13, 14) eine Längsachse (16, 17) aufweist, wobei die aus der Konturöffnung (13, 14) austretende Längsachse (16, 17) am Ort der Konturöffnung (13, 14) entgegen der Drehrichtung (2) geneigt ist.

3. Bearbeitungswerkzeug nach Anspruch 1 oder 2,
**dadurch gekennzeichnet, dass** ein weiterer durchgängiger Luftkanal (9) im Grundkörper ausgebildet ist, wobei der weitere Luftkanal (9) mit einer Spanraumöffnung (12) in den Spanraum (5) mündet, wobei der weitere Luftkanal (9) mit einer der Spanraumöffnung (12) gegenüberliegenden Konturöffnung (15) aus der Außenkontur (6) des Grundkörpers (3) herausgeführt ist, und wobei der weitere Luftkanal (9) als Spülkanal ausgebildet ist, wobei die Konturöffnung (15) des weiteren Luftkanals (9) bezogen auf die Drehrichtung (2) vor der zugeordneten Spanraumöffnung (12) liegt.

4. Bearbeitungswerkzeug nach Anspruch 3,
**dadurch gekennzeichnet, dass** der als Spülkanal ausgebildete Luftkanal (9) im Bereich seiner Konturöffnung (15) eine Längsachse (18) aufweist, wobei die aus der Konturöffnung (15) austretende Längsachse (18) am Ort der Konturöffnung (15) zur Drehrichtung (2) hin geneigt ist.

5. Bearbeitungswerkzeug nach Anspruch 3 oder 4,
**dadurch gekennzeichnet, dass** die Konturöffnung (15) des als Spülkanal ausgebildeten Luftkanals (9) als aerodynamisch geformte, insbesondere gegenüber der Außenkontur (6) versenkte Lufthutze (19) ausgeführt ist.

6. Bearbeitungswerkzeug nach einem der Ansprüche 3 bis 5,
**dadurch gekennzeichnet, dass** die aus der Spanraumöffnung (12) austretende und in den Spanraum (5) eintretende Längsachse (18) des als Spülkanal ausgebildeten Luftkanals (9) bezogen auf eine durch die Drehachse (1) vorgegebene und durch den Spanraum (5) laufende Radialrichtung (21) radial nach außen geneigt ist.

7. Bearbeitungswerkzeug nach einem der Ansprüche 3 bis 6, **dadurch gekennzeichnet, dass** die aus der Spanraumöffnung (12) austretende und in den Spanraum (5) eintretende Längsachse (18) des als Spülkanal ausgebildeten Luftkanals (9) bezogen auf die Drehachse (1) eine axiale Richtungskomponente aufweist.

8. Bearbeitungswerkzeug nach einem der Ansprüche 2 bis 7,
**dadurch gekennzeichnet, dass** mindestens ein als Entlastungskanal ausgebildeter Luftkanal (7, 8) und mindestens ein als Spülkanal ausgebildeter Luftkanal (9) in einen gemeinsamen Spanraum (5) münden.

## Claims

1. Machining tool for machining materials, in particular wood or wood-like materials, metals, plastics and/or composite materials, provided for rotary drive about an axis of rotation (1) in one direction of rotation (2), comprising a base body (3) and at least one cutting edge (4) mounted on the base body (3) as well as a chip space (5) assigned to the respective cutting edge (4) and formed in the base body (3) in front of the cutting edge (4) with respect to the direction of rotation (2), the base body (3) having an external contour (6) away from the chip space (5), wherein at least one continuous air passage (7, 8) is formed in the base body (3), wherein the air passage (7, 8) terminates into the chip space (5) with a chip space opening (10, 11), and wherein the air passage (7, 8) is routed out of the external contour (6) of the base body (3) with a contour opening (13, 14) located opposite the chip space opening (10, 11), **characterised in that** the air passage (7, 8) is designed as a relief passage, wherein the contour opening (13, 14) of the air passage (7, 8) is located behind the associated chip space opening (10, 11) with respect to the direction of rotation (2).

2. Machining tool according to claim 1,
**characterised in that** the air passage (7, 8) designed as a relief passage has a longitudinal axis (16, 17) in the region of its contour opening (13, 14), wherein the longitudinal axis (16, 17) emerging from the contour opening (13, 14) is inclined against the direction of rotation (2) at the position of the contour opening (13, 14).

3. Machining tool according to claim 1 or 2,
**characterised in that** a further continuous air passage (9) is formed in the base body, wherein the further air passage (9) terminates into the chip space (5) with a chip space opening (12), wherein the further air passage (9) is routed out of the external contour (6) of the base body (3) with a contour opening (15) located opposite the chip space opening (12), and wherein the further air passage (9) is designed as a scavenging passage, wherein the contour opening (15) of the further air passage (9) is located in front of the associated chip space opening (12) with respect to the direction of rotation (2).

4. Machining tool according to claim 3,
**characterised in that** the air passage (9) designed as a scavenging passage has a longitudinal axis (18) in the region of its contour opening (15), wherein the longitudinal axis (18) emerging from the contour opening (15) is inclined towards the direction of rotation (2) at the position of the contour opening (15).

5. Machining tool according to claim 3 or 4,
**characterised in that** the contour opening (15) of the air passage (9) designed as a scavenging passage is configured as an aerodynamically shaped air scoop (19), which is in particular recessed with respect to the external contour (6).

6. Machining tool according to any of claims 3 to 5,
**characterised in that** the longitudinal axis (18) - emerging from the chip space opening (12) and entering the chip space (5) - of the air passage (9) designed as a scavenging passage is inclined radially outwards with respect to a radial direction (21) predetermined by the axis of rotation (1) and extending through the chip space (5).

7. Machining tool according to any of claims 3 to 6,
**characterised in that** the longitudinal axis (18) - emerging from the chip space opening (12) and entering the chip space (5) - of the air passage (9) designed as a scavenging passage has an axial directional component with respect to the axis of rotation (1).

8. Machining tool according to any of claims 2 to 7,
**characterised in that** at least one air passage (7, 8) designed as a relief passage and at least one air passage (9) designed as a scavenging passage terminate into a common chip space (5).

## Revendications

1. Outil d'usinage pour l'usinage par enlèvement de matière de matériaux, en particulier pour du bois ou des matériaux de type bois, des métaux, des matières plastiques et/ou des matériaux composites, destiné à l'entraînement en rotation autour d'un axe de rotation (1) dans une direction de rotation (2), comprenant un corps de base (3) et au moins une lame (4) montée sur le corps de base (3) ainsi qu'un dégagement pour copeaux (5) associé à chaque lame (4) et formé dans le corps de base (3) devant la lame (4) par rapport à la direction de rotation (2), dans lequel le corps de base (3) présente à l'écart du dégagement (5) un contour extérieur (6), dans lequel au moins un conduit d'air (7, 8) continu est formé dans le corps de base (3), dans lequel le conduit d'air (7, 8) débouche avec une ouverture de dégagement pour copeaux (10, 11) dans le dégagement pour copeaux (5), et dans lequel le conduit d'air (7, 8) sort du contour extérieur (6) du corps de base (3) avec une ouverture de contour (13, 14) opposée à l'ouverture de dégagement pour copeaux (10, 11), **caractérisé en ce que** le conduit d'air (7, 8) est formé comme conduit de décharge, dans lequel l'ouverture de contour (13, 14) du conduit d'air (7, 8) se trouve derrière l'ouverture de dégagement pour copeaux (10, 11) associée, par rapport à la direction de rotation (2).

2. Outil d'usinage selon la revendication 1,
**caractérisé en ce que** le conduit d'air (7, 8) formé comme conduit de décharge présente dans la zone de son ouverture de contour (13, 14) un axe longitudinal (16, 17), dans lequel l'axe longitudinal (16, 17) sortant de l'ouverture de contour (13, 14) est incliné à l'endroit de l'ouverture de contour (13, 14) par rapport à la direction de rotation (2).

3. Outil d'usinage selon la revendication 1 ou 2,
**caractérisé en ce qu'**un autre conduit d'air (9) continu est formé dans le corps de base, dans lequel l'autre conduit d'air (9) débouche avec une ouverture de dégagement pour copeaux (12) dans le dégagement pour copeaux (5), dans lequel l'autre conduit d'air (9) sort du contour extérieur (6) du corps de base (3) avec une ouverture de contour (15) opposée à l'ouverture de dégagement pour copeaux (12), et dans lequel l'autre conduit d'air (9) est formé comme conduit de rinçage, dans lequel l'ouverture de contour (15) de l'autre conduit d'air (9) se trouve devant l'ouverture de dégagement pour copeaux (12) associée, par rapport à la direction de rotation (2).

4. Outil d'usinage selon la revendication 3,
**caractérisé en ce que** le conduit d'air (9) formé comme conduit de rinçage présente dans la zone de son ouverture de contour (15) un axe longitudinal (18), dans lequel l'axe longitudinal (18) sortant de l'ouverture de contour (15) est incliné à l'endroit de l'ouverture de contour (15) vers la direction de rotation (2).

5. Outil d'usinage selon la revendication 3 ou 4,
**caractérisé en ce que** l'ouverture de contour (15) du conduit d'air (9) formé comme conduit de rinçage est réalisée sous la forme d'une ouïe d'entrée (19) de forme aérodynamique, en particulier enfoncée par rapport au contour extérieur (6).

6. Outil d'usinage selon l'une des revendications 3 à 5,
**caractérisé en ce que** l'axe longitudinal (18), sortant de l'ouverture de dégagement pour copeaux (12) et entrant dans le dégagement pour copeaux (5), du conduit d'air (9) formé comme conduit de rinçage est incliné radialement vers l'extérieur par rapport à une direction radiale (21) traversant l'axe de rotation (1) et le dégagement pour copeaux (5).

7. Outil d'usinage selon l'une des revendications 3 à 6,
**caractérisé en ce que** l'axe longitudinal (18), sortant de l'ouverture de dégagement pour copeaux (12) et entrant dans le dégagement pour copeaux (5), du conduit d'air (9) formé comme conduit de rinçage présente une composante de direction axiale par rapport à l'axe de rotation (1).

8. Outil d'usinage selon l'une des revendications 2 à 7,
**caractérisé en ce qu'**au moins un conduit d'air (7, 8) formé comme conduit de décharge et au moins un conduit d'air (9) formé comme conduit de rinçage débouchent dans un dégagement pour copeaux (5) commun.
